# EUROPÄISCHE PATENTSCHRIFT

(11) **EP 3 123 608 B1**
(45) Veröffentlichungstag und Bekanntmachung des Hinweises auf die Patenterteilung: **06.02.2019**
(21) Anmeldenummer: 15825923.4
(22) Anmeldetag: 20.11.2015
(51) Int. Cl.: H02P 6/08

(54) **EINGANGSSTUFE FÜR EINE MOTORSTEUERUNG SOWIE MOTORSTEUERUNG, INSBESONDERE FÜR EINEN ELEKTROMOTOR**
INPUT STAGE FOR MOTOR CONTROL AND THE MOTOR CONTROL, ESPECIALLY FOR AN ELECTRIC MOTOR
ETAGE D'ENTRÉE POUR CONTROLER UN MOTEUR ET LE CONTROLE DU MOTEUR, NOTAMMENT POUR UN MOTEUR ÉLECTRIQUE

(30) Priorität: 15.12.2014 DE 102014225876
(43) Veröffentlichungstag der Anmeldung: 01.02.2017
(73) Patentinhaber: ZIEHL-ABEGG SE, 74653 Künzelsau (DE)
(72) Erfinder: KNORR, Joachim, 97996 Niederstetten (DE)
(74) Vertreter: Patent- und Rechtsanwälte Ullrich & Naumann
(86) Internationale Anmeldenummer: PCT/DE2015/200513
(87) Internationale Veröffentlichungsnummer: WO 2016/095914

(56) Entgegenhaltungen:
- JP-A- H07 250 180
- US-A- 4 856 286
- US-B1- 7 031 454
- Klaus Müller ET AL: "DiSEqC 2.0 für Techniker", , 28. Februar 1999 (1999-02-28), Seiten 1-12, XP055271466, Gefunden im Internet: URL:http://www.spaun.de/files/8df79_de_DiS EqC_fur_Techniker_.pdf [gefunden am 2016-05-10]

## Beschreibung

Die Erfindung betrifft eine Eingangsstufe für eine Motorsteuerung, insbesondere eine Motorsteuerung für einen Elektromotor, wobei die Eingangsstufe einen Eingang zum Eingeben eines Eingangssignals und einen Ausgang zum Verbinden mit der Motorsteuerung aufweist, wobei die Eingangsstufe dazu ausgebildet ist, aus einem Eingangssignal zwischen einer ersten Spannung Uᵤₙₜₑₙ und einer zweiten Spannung U_{oben} > Uᵤₙₜₑₙ ein Stellsignal zu erzeugen und das Stellsignal als Sollwertvorgabe über den Ausgang an die Motorsteuerung auszugeben.

Die Erfindung betrifft ferner eine Motorsteuerung, insbesondere für einen Elektromotor, mit einer entsprechenden Eingangsstufe, wobei die Eingangsstufe mit einem Steuereingang der Motorsteuerung verbunden ist, wobei die Motorsteuerung basierend auf einem über den Steuereingang empfangenen Stellsignal einen mit der Motorsteuerung verbundenen Motor derart ansteuert, dass ein in dem Stellsignal kodierter Sollwert zumindest annährend eingehalten ist.

Die Erfindung betrifft ferner einen entsprechenden Schnittstellenadapter.

Zur Ansteuerung vieler Elektromotoren werden Motorsteuerungen eingesetzt. Diese erzeugen aus einer Gleich- oder Wechselspannung eine oder mehrere Spannungen zum Ansteuern des Elektromotors. Für einige Motortechnologien, beispielsweise EC (Electronically Commutated)-Motoren, ist dies sogar essentiell, da die Motorsteuerung Spannungen an den Stator des Motors ausgibt, die den Rotor erst zu einer Drehbewegung veranlassen. Die Motorsteuerung ist dabei häufig in das Gehäuse des Motors integriert oder in einem Zusatzgehäuse an dem Motorengehäuse angeordnet. Entsprechende Motorsteuerungen sind aus der Praxis hinlänglich bekannt. Ein Anwendungsbereich für derartige Motorsteuerungen sind beispielsweise Ventilatoren mit EC-Motor mit integrierter Elektronik.

Zur Drehzahlvorgabe ist es gebräuchlich, ein analoges Signal als Stellsignal in die Motorsteuerung einzugeben. Ein derartiges Stellsignal kann beispielsweise eine Spannung zwischen 0 V und 10 V sein. Das Stellsignal wird durch eine steuernde Vorrichtung ausgegeben, die beispielsweise in einer Lüftungssteuerung eine Solldrehzahl in Abhängigkeit einer gemessenen Temperatur vorgibt.

Eine andere Möglichkeit der Drehzahlvorgabe ist die Verwendung eines pulsweiten modulierten (PWM) Signals. Ein derartiges System ist in der US 4 856 286 A offenbart. Das dort beschriebene Wärmepumpensystem umfasst einen EC-Motor, der durch eine Motorsteuerung über drei Versorgungsleitungen angesteuert wird. Jeweils zwei der Versorgungsleitungen werden zum Versorgen des Motors verwendet, während die dritte Versorgungsleitung zum Übertragen eines Positionssignals genutzt wird. Der Motorsteuerung ist ein Kühlsystemregler vorgeschaltet, der über eine Leitung ein PWM-Signal an die Motorsteuerung ausgibt und darüber die Drehzahl des Motors vorgibt.

Eine Mischlösung, bei der sowohl ein analoges als auch ein PWM-Signal eingegeben werden kann, ist in der US 5 361 025 A offenbart. Eine Interface-Schaltung unterscheidet abhängig vom Pegel einer Eingangsspannung zwischen einem analogen Signal und einem PWM-Signal. Mit dem Eingang der Interface-Schaltung sind zwei Komparatoren C1 und C2 verbunden, die die Eingangsspannung Vᵢₙ jeweils mit einem Schwellwert V_{L} bzw. V_{H} vergleichen. Wenn die Eingangsspannung Vᵢₙ zwischen den Schwellwerten V_{L} und V_{H} liegt, wird für das Anliegen eines analogen Signals entschieden und die Interface-Schaltung erzeugt eine analoge Ausgangsspannung V_{O}, die von der Differenz zwischen der Eingangsspannung Vₙ und dem unteren Schwellwert V_{L} abhängt. Wenn die Eingangsspannung zwischen einem Wert unterhalb des unteren Schwellwerts V_{L} und einem Wert oberhalb des oberen Schwellwerts V_{H} wechselt, wird für ein PWM-Signal entschieden. Die Interface-Schaltung wandelt das PWM-Signal in eine analoge Ausgangsspannung V_{O} um, die vom Tastverhältnis des PWM-Signals abhängig ist.

Sehr häufig ist bei der Motorsteuerung ein Meldeausgang vorgesehen, über den Statusinformationen zu dem angeschlossenen Motor ausgegeben werden können. Über den Meldeausgang kann beispielsweise der ordnungsgemäße Betrieb oder ein Fehlerzustand des Motors kommuniziert werden.

In der Praxis sind Motorsteuerungen bekannt, bei denen das Betriebsverhalten des angeschlossenen Motors durch Parametrierung verändert und/oder an Kundenanforderungen angepasst werden kann, ohne die Firmware in der Motorsteuerung zu verändern, d.h. die Programmierung anzupassen. Diese Möglichkeit ist in vielen Fällen wichtig, um unter dem Aspekt von Zertifizierungen und Zulassungen, welche Firmware-Änderungen sehr aufwendig werden lassen können, eine gewisse Flexibilität hinsichtlich Kundenanpassungen zu erhalten.

Für die Parametrierung ist eine Kommunikationsschnittstelle erforderlich, die häufig auch zum Einspielen einer neuen Firmware in die Motorsteuerung nutzbar ist. Viele anfallende Änderungen an der Parametrierung sind jedoch im Rahmen einer Inbetriebnahme einer Anlage notwendig, um die Anlage durch Einstellung von Parametern bestmöglich an die tatsächliche Betriebsumgebung anzupassen. Daher muss die Kommunikationsschnittstelle auch nach Fertigstellung des Geräts oder der Anlage, in der der Motor und die Motorsteuerung eingebaut sind, zugänglich sein. Nachteilig ist, dass dadurch hinsichtlich des Installationsortes der Motorsteuerung enge Grenzen entstehen oder dass zusätzliche Kommunikationsleitungen samt Anschlüssen verlegt werden müssen. Die erstgenannte Option kann beispielsweise bei Ventilatoren häufig nicht erfüllt werden, da diese in vielen Geräten und Anlagen recht unzugänglich verbaut sind. Das Bereitstellen von Kommunikationsleitungen erzeugt zusätzlichen Installationsaufwand und benötigt Anschlussraum für die Klemmen. Da eine Parametrierung in vielen Anlagen lediglich einmalig oder zumindest sehr selten vorgenommen werden müssen, ist der damit verbundene Aufwand im Vergleich zu dessen Nutzen nicht unerheblich.

Klaus Müller et al: "DiSEqC 2.0 für Techniker" fasst Funktionen von DiSCEqC (Digital Satellite Equipment Control) zusammen, das zum Steuern von Empfangseinheiten einer Satellitenempfangsanlage genutzt wird. Bei DiSCEqC werden Daten digital über die Versorgungsleitungen übertragen, wobei jedes der seriell übertragenen Bits 1,5 ms lang ist. Ein 1 ms langer 22 kHz Ton gefolgt von 0,5 ms Ruhe bedeutet eine logische "0". Ein 0,5 ms langer 22 kHz Ton gefolgt von 1 ms Ruhe bedeutet eine logische "1". Zum Gewährleisten einer Abwärtskompatibilität zu analogen Schaltsignalen, bei denen ein Pegelwechsel ein Umschalten der Polarisation des Empfängers signalisiert, wird der Pegel der Versorgungsspannung bei DiSCEqC-Slaves mittels eines Komparators ausgewertet.

Der vorliegenden Erfindung liegt die Aufgabe zugrunde, eine Eingangsstufe, eine Motorsteuerung und einen Schnittstellenadapter der eingangs genannten Art derart auszugestalten und weiterzubilden, dass eine Kommunikation mit der Motorsteuerung mit möglichst niedrigem Installationsaufwand und niedrigen Kosten möglich ist.

Erfindungsgemäß wird die voranstehende Aufgabe durch die Merkmale des Anspruchs 1 gelöst. Danach ist die in Rede stehende Eingangsstufe gekennzeichnet durch einen ersten Komparator zum Vergleichen des Eingangssignals mit einer ersten Schwellenspannung U_{S1} > U_{oben} und eine Datenausgabeeinheit, wobei die Datenausgabeeinheit basierend auf zumindest einem Anteil des Eingangssignals ein Kommunikationssignal erzeugt, wobei der erste Komparator bei Erreichen oder Überschreiten der ersten Schwellenspannung U_{S1} durch das Eingangssignal ein Aktivierungssignal ausgibt, das eine Ausgabe des Kommunikationssignals durch die Datenausgabeeinheit an den Ausgang aktiviert,
wobei die Datenausgabeeinheit (10) eine zweite Schaltvorrichtung (8) und einen zweiten Komparator (6) zum Vergleichen des Eingangssignals mit einer zweiten Schwellenspannung U_{S2} > U_{S1} umfasst und wobei der zweite Komparator (6) bei Erreichen oder Überschreiten der zweiten Schwellenspannung U_{S2} ein Schaltsignal an die zweite Schaltvorrichtung (8) ausgibt.

Hinsichtlich einer Motorsteuerung wird die voranstehende Aufgabe durch die Merkmale des Anspruchs 8 gelöst. Danach ist die in Rede stehende Motorsteuerung dadurch gekennzeichnet, dass die Motorsteuerung Mittel zum Erkennen eines an dem Steuereingang anliegenden Kommunikationssignal aufweist und dass die Motorsteuerung dazu ausgebildet ist, bei Erkennen eines Kommunikationssignals am Steuereingang in einen Konfigurationsmodus zu wechseln und das empfangene Kommunikationssignal zu verarbeiten.

Hinsichtlich eines Schnittstellenadapters wird die voranstehende Aufgabe durch die Merkmale des Anspruchs 12 gelöst. Danach umfasst der Schnittstellenadapter eine erste Schnittstelle und eine zweite Schnittstelle, wobei die erste Schnittstelle mit einem Endgerät, insbesondere einem Programmiergerät, verbindbar ist, wobei die zweite Schnittstelle mit der Eingangsstufe verbindbar ist und wobei der Schnittstellenadapter Daten, die über die erste Schnittstelle empfangen werden, auf ein Eingangssignal für die Eingangsstufe umsetzt und an die Eingangsstufe ausgibt.

In erfindungsgemäßer Weise ist zunächst erkannt worden, dass auf das Bereitstellen einer separaten Kommunikationsschnittstelle durch separate Kommunikationsleitungen auf vergleichsweise einfache Art und Weise verzichtet werden kann. Es ist nämlich erkannt worden, dass das Stellsignal, mit dem ein Sollwert an die Motorsteuerung vorgegeben wird, lediglich in einem normalen Betrieb der Motorsteuerung erforderlich ist. Bei einer Parametrierung der Motorsteuerung wird dieses Stellsignal nicht benötigt. Daher wird erfindungsgemäß die zur Vorgabe des Stellsignals bereitgestellte Schnittstelle in die Motorsteuerung verwendet und eine besonders ausgestaltete Eingangsstufe für die Motorsteuerung bereitgestellt.

Bei der erfindungsgemäßen Eingangsstufe wird ausgenutzt, dass zur Vorgabe eines Sollwerts üblicherweise ein Eingangssignal zwischen einer ersten Spannung Uᵤₙₜₑₙ und einer zweiten Spannung U_{oben} verwendet wird, wobei die zweite Spannung U_{oben} größer als die erste Spannung Uᵤₙₜₑₙ ist. Gebräuchlich sind beispielsweise Spannungen zwischen Uᵤₙₜₑₙ = 0 V und U_{oben} = 10 V. Dies bedeutet, dass üblicherweise in einem normalen Betrieb das Eingangssignal die zweite Spannung nicht oder zumindest nicht wesentlich überschreitet. Dieser Umstand kann dazu genutzt werden, dass das Übertragen eines Kommunikationssignals mit einer Spannung oberhalb einer ersten Schwellenspannung U_{S1} signalisiert wird, wobei die erste Schwellenspannung U_{S1} größer als die zweite Spannung U_{oben} ist. Wichtig dabei ist lediglich, dass die Eingangsstufe und/oder die Motorsteuerung die höhere Eingangsspannung geeignet verarbeiten kann und die höhere Eingangsspannung nicht zu einer Zerstörung der Elektronik oder Teile davon führen.

Zum Auswerten eines derartigen Eingangssignals umfasst die erfindungsgemäße Eingangsstufe einen ersten Komparator, der das Eingangssignal mit einer ersten Schwellenspannung U_{S1} vergleicht. Wenn das Eingangssignal die erste Schwellenspannung U_{S1} erreicht oder überschreitet, gibt der erste Komparator ein Aktivierungssignal aus. Dieses Aktivierungssignal wird einer Datenausgabeeinheit zugeführt, die durch das Aktivierungssignal zur Ausgabe eines Kommunikationssignals veranlasst wird, wobei das Kommunikationssignal basierend auf zumindest einen Anteil des Eingangssignals erzeugt wird. Auf diese Weise kann durch Ergänzung von Funktionen des Steuereingangs eine Kommunikation mit der Motorsteuerung bereitstellt werden, ohne dass dedizierte Kommunikationsleitungen oder Anschlussklemmen installiert werden müssen. Dadurch ist der Installationsaufwand deutlich reduziert.

Da eine Kommunikation mit der Motorsteuerung, insbesondere zur Eingabe von Parametrierungen, Programmierungen oder anderweitigen Einstellungen, lediglich selten vorgenommen werden müssen, können hierzu mobile Schnittstellenadapter bereitgestellt werden, die die Eingangsstufe zur Erzeugung eines Aktivierungssignals veranlassen und ein geeignet moduliertes Eingangssignal in die Eingangsstufe erzeugen, aus dem die Datenausgabeeinheit ein Kommunikationssignal für die Motorsteuerung erzeugen kann. Auf diese Weise sind relativ wenige zusätzliche Bauteile notwendig, um die Motorsteuerung mit einer Kommunikationsfähigkeit auszustatten.

Selbst wenn die Ausgestaltung des Schnittstellenadapters als mobiles Gerät eine bevorzugte Ausgestaltung ist, sind dennoch auch "stationäre" Schnittstellenadapter denkbar, d.h. der Schnittstellenadapter verbleibt am Gerät. Dies bietet sich insbesondere in Anwendungsszenarien an, bei denen häufig Änderungen an der Parametrierung oder der Firmware vorgenommen werden sollen. Auch in diesem Szenarium können die Vorteile der erfindungsgemäßen Eingangsstufe realisiert werden, beispielsweise hinsichtlich des reduzierten Installationsaufwands. Es wäre auch denkbar, dass der Schnittstellenadapter in die steuernde Vorrichtung, die einen Sollwert an die Motorsteuerung ausgibt, integriert oder bei dieser angeordnet ist. Der Schnittstellenadapter könnte an einen Bus, beispielsweise ein digitales Bus-System, angeschlossen sein, was die Übertragung einer neuen Parametrierung oder einer Programm-Aktualisierungen aus größerer Entfernung ermöglichen würde. Bei Integration des Schnittstellenadapters in die steuernde Vorrichtung könnte das Bus-System sowohl zur Steuerung des Motors als auch zur Parametrierung verwendet werden.

Die erfindungsgemäße Eingangsstufe kann dabei auf verschiedenste Art und Weise realisiert sein. So wäre denkbar, die Bauteile der Eingangsstufe in einem separaten Modul anzuordnen, das zwischen der eigentlichen Motorsteuerung und dem Steuereingang geschaltet ist. In einer bevorzugten Ausgestaltung ist die Eingangsstufe jedoch auf der Platine der Motorsteuerung angeordnet. Da für die Realisierung der Eingangsstufe wenige Bauteile notwendig sind, lassen sich diese vergleichsweise einfach auf der Motorsteuerplatine anordnen.

Prinzipiell kann die Datenausgabeeinheit das Kommunikationssignal basierend auf verschiedenste Anteile des Eingangssignals erzeugen. So kann beispielsweise nach Aktivierung der Datenausgabeeinheit ein frequenz- und/oder amplitudenmoduliertes Signal eingegeben werden, das unterschiedlichste Spannungsniveaus annehmen kann. In einer bevorzugten Ausgestaltung erzeugt die Datenausgabeeinheit das Kommunikationssignal jedoch aus einem Anteil des Eingangssignals, das größer oder gleich der ersten Schwellenspannung U_{S1} ist. Auf diese Weise kann verhindert werden, dass durch eine Spannungsspitze, die die erste Schwellenspannung U_{S1} überschreitet, ein Konfigurationsmodus aktiviert wird und die Motorsteuerung in einen undefinierten Zustand versetzt wird. Wenn ein Anteil der Eingangsspannung größer oder gleich der ersten Schwellenspannung U_{S1} zur Erzeugung des Kommunikationssignals verwendet wird, bleibt das Eingangssignal in einem Konfigurationsmodus oberhalb von der ersten Schwellenspannung U_{S1}, wodurch dauerhaft ein Aktivierungssignal durch den ersten Komparator ausgegeben wird. Dadurch kann, insbesondere in rauen Betriebsumgebungen mit einem hohen Störsignalanteil, die Betriebssicherheit erhöht werden.

In der Ausgestaltung ist zum Aktivieren der Ausgabe des Kommunikationssignals durch die Datenausgabeeinheit an den Ausgang der Eingangsstufe eine erste Schaltvorrichtung vorgesehen. Die erste Schaltvorrichtung weist dabei vorzugsweise zwei Eingänge auf, wobei einer der beiden Eingänge mit der Datenausgabeeinheit verbunden ist und wobei an dem zweiten der beiden Eingänge zumindest zeitweise das Stellsignal anliegt. Auf diese Weise kann die erste Schaltvorrichtung alternativ das Stellsignal oder das Kommunikationssignal an den Ausgang der Schaltvorrichtung schalten. Bei Verwendung einer ersten Schaltvorrichtung ist das Aktivierungssignal als Schaltsignal für die Schaltvorrichtung ausgestaltet, das in einen Schalteingang der Schaltvorrichtung eingegeben wird und das bei Überschreiten und Unterschreiten eines Schaltpegels einen Schaltvorgang auslöst. Dabei kann die erste Schaltvorrichtung derart ausgestaltet sein, dass bei einer Spannung am Schalteingang kleiner als der Schaltpegel das Stellsignal an dem Ausgang der Schalteinrichtung ausgegeben wird. Wenn der Schaltpegel durch das Aktivierungssignal überschritten wird, kann die erste Schaltvorrichtung auf den anderen Eingang umschalten und dadurch das Kommunikationssignal an den Ausgang ausgeben.

Die Datenausgabeeinheit kann prinzipiell auf verschiedenste Arten ausgebildet sein. Die jeweilige Ausbildung der Datenausgabeeinheit wird im Wesentlichen davon abhängen, aus welchem Anteil des Eingangssignals das Kommunikationssignal extrahiert werden soll. In der Ausgestaltung umfasst die Datenausgabeeinheit eine zweite Schaltvorrichtung und einen zweiten Komparator. Der zweite Komparator vergleicht dabei das Eingangssignal mit einer zweiten Schwellenspannung U_{S2}, wobei die zweite Schwellenspannung U_{S2} größer als die erste Schwellenspannung U_{S1} ist. Bei Erreichen oder Überschreiten der zweiten Schwellenspannung U_{S1} durch das Eingangssignal kann der zweite Komparator ein Schaltsignal erzeugen und dieses an einen Schalteingang der zweiten Schaltvorrichtung ausgeben. Die zweite Schaltvorrichtung kann dabei zwei Eingänge aufweisen, von denen einer mit einem ersten Logiksignal beaufschlagt ist und der andere mit einem zweiten Logiksignal. Dabei repräsentieren das erste Logiksignal und das zweite Logiksignal komplementäre Logikwerte, insbesondere eine logische 0 und eine logische 1. Die Logiksignale können dabei auf unterschiedliche Arten gebildet sein. So kann beispielsweise ein erstes Logiksignal ein Rechtecksignal mit einer ersten Frequenz und das zweite Logiksignal eine Rechteckspannung mit einer zweiten Frequenz darstellen. Auf diese Weise kann bei Umschalten vom ersten Logiksignal auf das zweite Logiksignal oder umgekehrt ein frequenzmoduliertes Signal am Ausgang der Schaltvorrichtung erzeugt werden. In einer bevorzugten Ausgestaltung ist jedoch das erste Logiksignal durch einen High-Pegel, das zweite Logiksignal durch einen Low-Pegel gebildet. Denkbar wäre beispielsweise einen Low-Pegel bei 0 Volt und einen High-Pegel bei +5 Volt.

Im Betrieb ist die zweite Schaltvorrichtung vorzugsweise derart ausgebildet, dass bei Unterschreiten eines Schaltpegels durch das Schaltsignal das erste Logiksignal an einem Ausgang der zweiten Schaltvorrichtung anliegt, während bei Überschreiten des Schaltpegels durch das Schaltsignal das zweite Logiksignal an dem Ausgang der zweiten Schaltvorrichtung anliegt. Da das Schaltsignal durch den zweiten Komparator ausgegeben wird, der das Eingangssignal mit der zweiten Schwellenspannung U_{S2} vergleicht, bedeutet dies, dass bei Unterschreiten der zweiten Schwellenspannung U_{S2} durch das Eingangssignal das erste Logiksignal am Ausgang der zweiten Schaltvorrichtung anliegt, während bei Erreichen oder Überschreiten der zweiten Schwellenspannung U_{S2} die Schaltvorrichtung betätigt wird und dadurch das zweite Logiksignal an den Ausgang der zweiten Schaltvorrichtung geschaltet wird. Es sei darauf hingewiesen, dass bei "Unterschreiten eines Schaltpegels" und bei "Überschreiten des Schaltpegels" nicht zwangsläufig identische Schaltpegel vorliegen müssen. Vielmehr kann die Schaltvorrichtung eine gewisse Hysterese aufweisen, so dass die Schaltpegel für das Umschalten der Schaltvorrichtung voneinander abweichen können.

Der erste und/oder zweite Komparator und die erste und/oder zweite Schaltvorrichtung können auf verschiedenste Weise implementiert sein. Der/die Komparator/en kann/können jeweils mit einem Operationsverstärker realisiert sein, an dessen einen Eingang, beispielsweise dem invertierenden Eingang, die jeweilige Schwellenspannung anliegt und an dessen zweiten Eingang, beispielsweise an dem nicht-invertierenden Eingang, das Eingangssignal anliegt. Zum Erzielen definierter Schaltpegel für eine Schaltvorrichtung kann der Operationsverstärker als Schmitt-Trigger verschaltet sein. Die Schaltvorrichtung/en ist/sind vorzugsweise durch eine elektronische Schaltvorrichtung implementiert. Denkbar wäre beispielsweise die Verwendung eines oder mehrerer MOSFETs (Metal Oxide Semiconductor Field-Effect Transistor). Bei ausreichender Pegeländerung des Eingangssignals muss/müssen die Schwellenspannung/en nicht allzu genau sein. Präzisionsspannungsquellen sind nicht notwendig. In einer sehr einfachen Ausgestaltung kann/können die Schwellenspannung/en durch einen Spannungsteiler oder durch Zenerdioden erzeugt werden.

Im Normalbetrieb der Eingangsstufe und der Motorsteuerung, d.h. das Eingangssignal weist eine Spannung zwischen der ersten Spannung Uᵤₙₜₑₙ und der zweiten Spannung U_{oben} auf, kann das Erzeugen eines Stellsignals aus dem Eingangssignal auf verschiedenste Weisen erfolgen. In der einfachsten Ausgestaltung kann das Eingangssignal als Stellsignal an die Motorsteuerung weitergereicht werden, wobei in diesem Fall wegen der Möglichkeit einer höheren Spannung als der zweiten Spannung U_{oben} noch ein Überspannungsschutz, beispielsweise in Form einer Zenerdiode, vorgesehen sein kann. In einer bevorzugten Ausgestaltung ist jedoch ein Analog-zu-PWM-Wandler zur Erzeugung des Stellsignals aus dem Eingangssignal bereitgestellt. Der Analog-zu PWM-Wandler erzeugt dabei aus dem Eingangssignal ein PWM-Signal (Puls-Weiten-moduliertes Signal). Das erzeugte PWM-Signal weist vorzugsweise eine feste Frequenz, beispielsweise 1 kHz, auf. Unterschiedliche Spannungen des Eingangssignals können in dem Aussteuergrad des PWM-Signals kordiert sein. Dabei wäre die erste Spannung Uᵤₙₜₑₙ in einem ersten Aussteuergrad kodiert, die zweite Spannung U_{oben} in einem zweiten Aussteuergrad und Spannungen zwischen der ersten Spannung Uᵤₙₜₑₙ und der zweiten Spannung U_{oben} durch einen Aussteuergrad zwischen dem ersten und dem zweiten Aussteuergrad. Dabei ist der Spannungsbereich vorzugsweise linear auf den Aussteuergrad abgebildet. Wenn beispielsweise die erste Spannung Uᵤₙₜₑₙ = 0 V und die zweite Spannung U_{oben} = 10 Volt ist, so könnte die erste Spannung beispielsweise in einem ersten Aussteuergrad von 25% und die zweite Spannung U_{oben} in einem zweiten Aussteuergrad von 75% kordiert sein. Bei einer linearen Zuordnung der Spannungen zwischen der ersten und der zweiten Spannung zu dem Aussteuergrad würde beispielsweise eine Spannung von 4 Volt zu einem Aussteuergrad von 45 % führen, d.h. während einer Periode des PWM-Signals würde zu 45 % ein High-Pegel und zu 55 % ein Low-Pegel anliegen. Entsprechend geeignete Analog-zu-PWM-Wandler sind aus der Praxis hinlänglich bekannt.

Eine erfindungsgemäße Motorsteuerung weist eine erfindungsgemäße Eingangsstufe auf. Die Motorsteuerung gleicht in ihren Grundfunktionen im Wesentlichen den aus der Praxis bekannten Motorsteuerungen. So weist die Motorsteuerung einen Steuereingang auf, über den die Motorsteuerung ein Stellsignal empfangen kann. Entsprechend des in diesem Stellsignal kodierten Sollwerts steuert die Motorsteuerung einen mit ihr verbundenen Motor derart an, dass der Sollwert zumindest annähernd eingehalten wird. In vielen Ausgestaltungen ist der Sollwert eine Solldrehzahl, d.h. die Motorsteuerung steuert bzw. regelt den Motor derart, dass die Solldrehzahl zumindest annähernd eingehalten ist. Die erfindungsgemäße Motorsteuerung weist erfindungsgemäß zusätzlich Mittel zum Erkennen eines an dem Steuereingang anliegenden Kommunikationssignals auf. Bei Erkennen eines Kommunikationssignals am Steuereingang wechselt die Motorsteuerung in einen Konfigurationsmodus und verarbeitet danach das empfangene Kommunikationssignal. Wie die Verarbeitung des Kommunikationssignals ausgestaltet ist, hängt davon ab, was mit dem Kommunikationssignal übertragen wird. Bei Übertragen eines geänderten Parameters an die Motorsteuerung würde die Motorsteuerung die Parametrierung anpassen. Bei Übertragen eines Firmware-Updates oder anderweitiger Programmänderungen würde die Motorsteuerung bei der Verarbeitung des Kommunikationssignals das in der Motorsteuerung gespeicherte Programm entsprechend aktualisieren.

Die Mittel zum Erkennen eines Kommunikationssignals können auf unterschiedliche Arten ausgebildet sein. So wäre denkbar, dass von der Eingangsstufe dediziert über eine separate Leitung ein Logikpegel an die Motorsteuerung übergeben wird, mit der beispielsweise das Aktivierungssignal aus dem ersten Komparator direkt an die Motorsteuerung übergeben wird. Dadurch kann auf besonders einfache Art und Weise das Umschalten in einen Konfigurationsmodus signalisiert werden. Hinsichtlich einer ausreichenden Robustheit, insbesondere in industriellen Umgebungen, sind die Mittel zum Erkennen eines Kommunikationssignals jedoch vorzugsweise zur Auswertung der Frequenz eines an dem Steuereingang der Motorsteuerung anliegenden Signals ausgebildet. So kann bei Erkennen einer ersten Frequenz für ein Stellsignal und bei Erkennen einer zweiten Frequenz für ein Kommunikationssignal entschieden werden. Wenn das Stellsignal entsprechend dem zuvor genannten Beispiel eine Frequenz 1 kHz aufweist, so wäre die erste Frequenz, die die Mittel zum Erkennen eines Kommunikationssignals erkennen müssen, eine Frequenz von 1 kHz. Die zweite Frequenz würde durch die Frequenz definiert, mit der die Datenausgabeeinheit das Kommunikationssignal kodiert. Denkbare wäre beispielsweise eine Frequenz größer oder gleich 9 kHz. Auf diese Weise kann auf sehr einfache Art und Weise durch entsprechende Frequenzsensibilität ein Kommunikationssignal erkannt werden.

Da beispielsweise bei Parametrierungen oder Programmierung der Motorsteuerung eine Rückmeldung der Motorsteuerung sinnvoll ist, kann die Motorsteuerung einen besonders ausgestalteten Meldeausgang aufweisen, die die Motorsteuerung als Kommunikationsleitung nutzen kann. Denkbar wäre, den Meldeausgang im Normalbetrieb der Motorsteuerung zum Signalisieren von Betriebszuständen und im Konfigurationsmodus zum Versenden von Antworten auf ein empfangenes Kommunikationssignal zu nutzen. Auf diese Weise kann bei dieser Weiterbildung der erfindungsgemäßen Motorsteuerung über den Steuereingang eine Rx-Leitung und über dem Meldeausgang eine Tx-Leitung realisiert sein. Dies ermöglicht eine bidirektionale Kommunikation zwischen einem Programmiergerät und der Motorsteuerung.

Hinsichtlich des Beendens des Konfigurationsmodus sind ebenfalls verschiedene Ausgestaltungen denkbar. So kann beispielsweise aktiv nach Beenden eines Konfigurationsvorgangs ein Reset-Knopf betätigt werden, wodurch die Motorsteuerung neugestartet wird und nach dem Neustart in einen Normalbetrieb zurückkehrt. Denkbar wäre jedoch auch, dass mit dem Kommunikationssignal ein Terminierungssignal an die Motorsteuerung gesendet wird, wodurch die Motorsteuerung bei Erkennen des Terminierungssignals den Konfigurationsmodus beendet und in den Normalbetriebsmodus zurückkehrt. Dies kann auch in Verbindung mit einem Neustart der Motorsteuerung erfolgen, d.h. das Terminierungssignal initiiert einen Neustart der Motorsteuerung

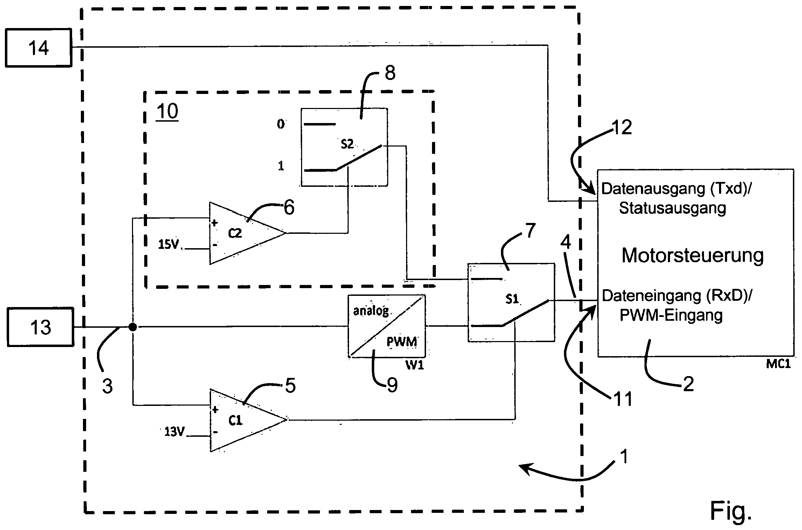

Es gibt nun verschiedene Möglichkeiten, die Lehre der vorliegenden Erfindung in vorteilhafter Weise auszugestalten und weiterzubilden. Dazu ist einerseits auf die dem Anspruch 1 bzw. 8 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige
- Fig.: eine schematische Darstellung eines Ausführungsbeispiels einer erfindungsgemäßen Eingangsstufe für eine Motorsteuerung.

Die einzige Figur zeigt ein Ausführungsbeispiel einer erfindungsgemäßen Eingangsstufe 1, die mit einer Motorsteuerung 2 verbunden ist. Die Eingangsstufe 1 weist einen Eingang 3 und einen Ausgang 4 auf. In der Eingangsstufe ist ein erster Komparator 5, ein zweiter Komparator 6, eine erste Schalteinrichtung 7 und eine zweite Schalteinrichtung 8 sowie ein Analog-zu-PWM-Wandler 9 enthalten. Der Eingang 3 ist mit dem nicht-invertierenden Eingang des ersten Komparators 5, mit dem nicht-invertierenden Eingang des zweiten Komparators 6 sowie mit dem Analogeingang des Analog-zu-PWM-Wandlers 9 verbunden. An dem invertierenden Eingang des ersten Komparators 5 liegt eine erste Schwellenspannung U_{S1} = 13 V an. An dem invertierenden Eingang des zweiten Komparators 6 liegt eine zweite Schwellenspannung U_{S2} = 15 V an. Auf diese Weise vergleicht der erste Komparator 5 ein Eingangssignal, das an dem Eingang 3 anliegt, mit einer ersten Schwellenspannung U_{S1} von 13 Volt, während der zweite Komparator 6 das Eingangssignal mit der zweiten Schwellenspannung U_{S2} von 15 Volt vergleicht. Der Ausgang des ersten Komparators 5 ist mit dem Schalteingang der ersten Schalteinrichtung 7 verbunden, der Ausgang des zweiten Komparators 6 ist mit dem Schalteingang der zweiten Schalteinrichtung 8 verbunden. Der PWM-Ausgang des Analog-zu-PWM-Wandlers 9 ist mit einem der Eingänge der ersten Schalteinrichtung verbunden, der ohne anliegendem Schaltsignal an dem Ausgang der ersten Schalteinrichtung anliegt. Der zweite Eingang der ersten Schalteinrichtung 7 ist mit dem Ausgang der zweiten Schalteinrichtung 8 verbunden. An den Eingängen der zweiten Schalteinrichtung liegen ein erstes Logiksignal und ein zweites Logiksignal an, die symbolisch mit einer "1" für eine logische 1 und einer "0" für eine logische 0 bezeichnet sind. Bei einer Steuerspannung unterhalb eines Schaltpegels am Schalteingang der zweiten Schalteinrichtung 8 ist standardmäßig das erste Logiksignal an den Ausgang geschaltet, das einer logischen 1 entspricht. Der zweite Komparator 6 und die zweite Schalteinrichtung 8 bilden gemeinsam die Datenausgabeeinheit 10.

Wenn am Eingang 3 der Eingangsstufe 1 eine Spannung kleiner als 13 Volt anliegt, liegt am Ausgang des ersten Komparators und am Ausgang des zweiten Komparators eine Spannung an, die unterhalb der Schaltschwelle für die erste Schalteinrichtung 7 und die zweite Schalteinrichtung 8 liegen. Damit ist die erste Schalteinrichtung 7 in der Grundposition, in der das Signal des Analog-zu-PWM-Wandlers 9 am Ausgang der Schalteinrichtung 7 und damit am Ausgang der Eingangsstufe 1 anliegt. Der Analog-zu-PWM-Wandler 9 habe einen Arbeitsbereich zwischen einer ersten Spannung Uᵤₙₜₑₙ = 0 Volt und einer zweiten Spannung U_{oben} = 10 Volt. Das durch den Analog-zu-PWM-Wandler 9 ausgegebene PWM-Signal hat eine feste Frequenz von 1 kHz, wobei der Aussteuergrad in Abhängigkeit der am Analogeingang anliegenden Spannung gewählt wird. Im vorliegenden Ausführungsbeispiel ist bei einer anliegenden Spannung von 0 V der Aussteuergrad gleich 25 %, der sich linear mit steigender Eingangsspannung erhöht, bis die Spannung von 10 V und ein Aussteuergrad von 75 % erreicht ist.

Wenn ein Kommunikationssignal an die Motorsteuerung 2 gesendet werden soll, so muss das Eingangssignal eine Spannung aufweisen, die zum Aktivieren der ersten Schalteinrichtung 7 geeignet ist. Da die erste Schwellenspannung U_{S1} in dem Ausführungsbeispiel zu 13 V gewählt ist, muss die am Eingang 3 anliegende Eingangsspannung eine Spannung von 13 V erreichen oder überschreiten. Wenn die Spannung von 13 Volt erreicht oder überschritten ist, gibt der erste Komparator 5 ein Aktivierungssignal an den Steuereingang der ersten Schalteinrichtung 7 aus, das die erste Schalteinrichtung 7 dazu veranlasst, auf den anderen Eingang der ersten Schalteinrichtung 7 zu schalten. Damit liegt am Ausgang 4 der Eingangsstufe 1 ein durch die Datenausgabeeinheit 10 erzeugtes Signal an und die Ausgabe eines Kommunikationssignals durch die Datenausgabeeinrichtung am Ausgang der Eingangsstufe ist aktiviert. In der gewählten Ausgestaltung würde eine logische 1 an die Motorsteuerung 2 ausgegeben. Erreicht oder überschreitet das Eingangssignal eine Spannung von 15 Volt, so gibt der zweite Komparator 6 ein Schaltsignal an die zweite Schalteinrichtung 8 aus, wodurch die zweite Schalteinrichtung 8 auf den anderen Eingang schaltet, der einer logischen 0 entspricht. Damit kann durch eine Spannung oberhalb von 13 Volt und unterhalb von 15 Volt eine logische 1 und mit einer Spannung oberhalb von 15 Volt eine logische 0 in das Eingangssignal kordiert werden. Denkbar wäre beispielsweise, eine logische 0 mit einer Spannung von 14 V und eine logische 0 mit einer Spannung von 16 V im Eingangssignal zu kodieren. Auf diese Weise kann die erfindungsgemäße Eingangsstufe 1 die bisher übliche Steuerspannung zwischen 0 und 10 Volt als Stellsignal an die Motorsteuerung 2 ausgeben und gleichzeitig bei einer Spannung größer als 10 Volt ein Kommunikationssignal an die Motorsteuerung übergeben.

Der Ausgang 4 in der Eingangsstufe 1 ist mit einem Steuereingang 11 der Motorsteuerung 2 verbunden. Im Betrieb sind in der Motorsteuerung Mittel zum Erkennen der Frequenz des am Eingang 11 anliegenden Signals implementiert. Diese Mittel entscheiden beispielsweise bei einer Signalfrequenz von 1 kHz für das Anliegen eines Steuersignals. Der in dem Steuersignal kordierte Sollwert, beispielsweise eine Soll-Drehzahl, wird durch die Motorsteuerung geeignet verarbeitet und beispielsweise der mit der Motorsteuerung verbundene Motor auf die Solldrehzahl geregelt. Ist aufgrund der Spannungspegel im Eingangssignal der Kommunikationspfad angeschaltet, dann liegt am Eingang 11 der Motorsteuerung 2 diese Frequenz nicht mehr an. Dies kann dazu genutzt werden, einen Konfigurationsmodus zu erkennen. Alternativ kann die Frequenz der Kommunikationsschnittstelle derart festgelegt werden, dass sie deutlich höher als die Frequenz des PWM-Signals liegt, beispielsweise größer oder gleich 9 kHz. Die Motorsteuerung 2 erkennt aufgrund dieser Festlegung, ob ein analoges Steuersignal oder ein Kommunikationssignal am Eingang der Eingangsstufe anliegt.

Bei Erkennen eines Kommunikationssignals am Eingang 11 der Motorsteuerung 2 wird die Auswertung des analogen Steuersignals beendet und der Eingang 11 zu einem Dateneingang RxD umkonfiguriert. Die Motorsteuerung wird danach in einen Konfigurationsmodus versetzt. Sofern der an der Motorsteuerung angeschlossene Motor noch in Bewegung ist, kann der Motor in einen sicheren Betriebsmodus gebracht werden, beispielsweise in Stillstand gebracht werden. Alternativ könnte der Motor mit der zuvor eingegebenen Soll-Drehzahl weiterdrehen, bis die Motorsteuerung wieder in einem Normalbetrieb zurückkehrt und der Steuereingang wieder ausgewertet wird. Die Motorsteuerung 2 weist zusätzlich einen Meldeausgang 12 auf, über den in einem Normalbetrieb Statusmeldungen über den eingeschlossenen Motor und/oder die Motorsteuerung ausgegeben werden. Bei Aktivierung des Konfigurationsmodus wird der Meldeausgang 12 zu einer Sendeleitung TxD umkonfiguriert.

Zum Eingeben eines Stellsignals und zur Kommunikation wird entsprechendes Eingabegerät (nicht eingezeichnet) mit einem Steuereingang 13 und einem Meldeausgang 14 verbunden. Wenn die Motorsteuerung beispielsweise einen EC-Motor mit einem Ventilator ansteuert, so kann mit dem Steuereingang ein Regler verbunden sein, der über den Meldeausgang 14 Statusinformationen über den Motor erhält. Im Normalbetrieb würde der Regler in dem vorliegenden Ausführungsbeispiel ein Eingangssignal zwischen 0 V und 10 V erzeugen und an den Steuereingang 13 eingeben. Der Steuereingang 13 ist mit dem Eingang 3 der Eingangsstufe 1 verbunden.

Zum Konfigurieren der Motorsteuerung muss ein geeignetes Kommunikationssignal eingegeben werden. Hierzu kann statt des Reglers ein Kommunikationsgerät angeschlossen werden. Dieses Kommunikationsgerät kann entweder direkt ein geeignet moduliertes Kommunikationssignal erzeugen oder kann mit einem Schnittstellenadapter verbunden sein. Der Schnittstellenadapter könnte eingangsseitig eine Standardschnittstelle, beispielsweise eine RS-485-Schnittstelle, aufweisen. Ausgangsseitig würde der Schnittstellenadapter mit dem Steuereingang 13 und dem Meldeeingang 14 verbunden. Wenn über die RS-485-Schnittstelle eine logische 1 empfangen wird, setzt der Schnittstellenadapter diese in eine Spannung von beispielsweise 14 V um. Bei einer zu übertragenden logischen 0 an der RS-485-Schnittstelle gibt der Schnittstellenadapter eine Spannung von beispielsweise 16 V aus. Der Schnittstellenadapter stellt damit einen Amplitudenmodulator dar. Entsprechend kann der Schnittstellenadapter ein über den Meldeausgang empfangenes Signal in ein RS-485-Signal umsetzen. Auf diese Weise kann ein gebräuchliches Kommunikationsgerät mit RS-485-Schnittstelle unter Verwendung eines Schnittstellenadapters mit der erfindungsgemäßen Motorsteuerung verbunden werden.

In dem in der Figur dargestellten Ausführungsbeispiel bleibt der Zustand des Konfigurationsmodus bis zu einem Reset der Motorsteuerung 2 erhalten. Erst nach dem Reset kann wieder ein analoges Steuersignal in der Motorsteuerung 2 ausgewertet werden.

Mit der beschriebenen Ausgestaltung der erfindungsgemäßen Eingangsstufe und der erfindungsgemäßen Motorsteuerung können die Installationskosten minimal gehalten werden. Durch einen Schnittstellenadapter sind die in der Eingangsstufe notwenigen Bauteile minimal, was sich wiederum positiv auf die Gesamtkosten auswirkt. Dadurch kann die Eingangsstufe auch in kleinen und kostengünstigen Ventilatoren verwendet werden. Alles was notwendig ist, um eine Schnittstelle in einem Industriestandard zu realisieren, kann außerhalb des Ventilators in den Schnittstellenadapter ausgelagert werden. Dieser Schnittstellenadapter ist mobil und kann nach Verwendung entfernt werden. Für Anwendungen, bei denen beispielsweise häufig Änderungen vorgenommen werden, kann der Schnittstellenadapter auch stationär sein, d.h. er kann bei dem Gerät verbleiben.

Hinsichtlich weiterer vorteilhafter Ausgestaltungen der erfindungsgemäßen Eingangsstufe bzw. der erfindungsgemäßen Motorsteuerung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel lediglich zur Erörterung der beanspruchten Lehre dienen, diese jedoch nicht auf das Ausführungsbeispiel einschränken.

### Bezugszeichenliste

- 1: Eingangsstufe
- 2: Motorsteuerung
- 3: Eingang
- 4: Ausgang
- 5: Erster Komparator
- 6: Zweiter Komparator
- 7: Erste Schalteinrichtung
- 8: Zweite Schalteinrichtung
- 9: Analog-zu-PWM-Wandler
- 10: Datenausgabeeinheit
- 11: Steuereingang/RxD
- 12: Meldeausgang/TxD
- 13: Steuereingang
- 14: Meldeausgang

## Patentansprüche

1. Eingangsstufe für eine Motorsteuerung, insbesondere eine Motorsteuerung für einen Elektromotor, wobei die Eingangsstufe (1) einen Eingang (3) zum Eingeben eines Eingangssignals und einen Ausgang (4) zum Verbinden mit der Motorsteuerung (2) aufweist, wobei die Eingangsstufe (1) dazu ausgebildet ist, aus einem Eingangssignal zwischen einer ersten Spannung (Uᵤₙₜₑₙ) und einer zweiten Spannung (U_{oben}) ein Stellsignal zu erzeugen, wobei die zweite Spannung (U_{oben}) größer als die erste Spannung (Uᵤₙₜₑₙ) ist, und das Stellsignal als Sollwertvorgabe über den Ausgang an die Motorsteuerung (2) auszugeben,
**gekennzeichnet durch** einen ersten Komparator (5) zum Vergleichen des Eingangssignals mit einer ersten Schwellenspannung (U_{S1}), wobei die erste Schwellenspannung (U_{S1}) größer als die zweite Spannung (U_{oben}) ist, und eine Datenausgabeeinheit (10), wobei die Datenausgabeeinheit (10) basierend auf zumindest einem Anteil des Eingangssignals ein Kommunikationssignal erzeugt, wobei der erste Komparator (5) bei Erreichen oder Überschreiten der ersten Schwellenspannung (U_{S1}) durch das Eingangssignal ein Aktivierungssignal ausgibt, das eine Ausgabe des Kommunikationssignals durch die Datenausgabeeinheit (10) an den Ausgang (4) aktiviert,
wobei die Datenausgabeeinheit (10) eine zweite Schaltvorrichtung (8) und einen zweiten Komparator (6) zum Vergleichen des Eingangssignals mit einer zweiten Schwellenspannung (U_{S2}), wobei die zweite Schwellenspannung (U_{S2}) größer als die erste Schwellenspannung (U_{S1}) ist, umfasst und wobei der zweite Komparator (6) bei Erreichen oder Überschreiten der zweiten Schwellenspannung (U_{S2}) ein Schaltsignal an die zweite Schaltvorrichtung (8) ausgibt.

2. Eingangsstufe nach Anspruch 1, **dadurch gekennzeichnet, dass** die Datenausgabeeinheit (10) das Kommunikationssignal aus dem Anteil des Eingangssignals größer oder gleich der ersten Schwellenspannung (U_{S1}) erzeugt.

3. Eingangsstufe nach Anspruch 1 oder 2, **dadurch gekennzeichnet, dass** zum Aktivieren der Ausgabe des Kommunikationssignals durch die Datenausgabeeinheit (10) an den Ausgang (4) eine erste Schaltvorrichtung (7) vorgesehen ist, wobei die erste Schaltvorrichtung (7) zwei Eingänge aufweist, wobei einer der beiden Eingänge der ersten Schaltvorrichtung (7) mit der Datenausgabeeinheit (10) verbunden ist und wobei an dem zweiten der beiden Eingänge zumindest zeitweise das Stellsignal anliegt.

4. Eingangsstufe nach Anspruch 3, **dadurch gekennzeichnet, dass** die erste Schaltvorrichtung (7) derart ausgestaltet ist, dass bei Unterscheiten eines Schaltpegels durch das Aktivierungssignal das Stellsignal an einem Ausgang der ersten Schaltvorrichtung (7) anliegt und dass bei Überschreiten des Schaltpegels durch das Aktivierungssignal das Kommunikationssignal an dem Ausgang der ersten Schaltvorrichtung (7) anliegt.

5. Eingangsstufe nach einem der Ansprüche 1 bis 4, **dadurch gekennzeichnet, dass** die zweite Schaltvorrichtung (8) zwei Eingänge aufweist, wobei an einem der beiden Eingänge ein erstes Logiksignal und an dem anderen der beiden Eingänge ein zweites Logiksignal anliegt, wobei das erste Logiksignal und das zweite Logiksignal komplementäre Logikwerte repräsentieren, wobei das erste Logiksignal vorzugsweise einen High-Pegel und das zweite Logiksignal vorzugsweise einen Low-Pegel aufweist.

6. Eingangsstufe nach einem der Ansprüche 1 bis 5, **dadurch gekennzeichnet, dass** die zweite Schaltvorrichtung (8) derart ausgebildet ist, dass bei Unterschreiten eines Schaltpegels durch das Schaltsignal das erste Logiksignal an einem Ausgang der zweiten Schaltvorrichtung (8) anliegt und dass bei Überschreiten des Schaltpegels durch das Schaltsignal das zweite Logiksignal an dem Ausgang der zweiten Schaltvorrichtung (8) anliegt.

7. Eingangsstufe nach einem der Ansprüche 1 bis 6, **dadurch gekennzeichnet, dass** die Eingangsstufe (1) zum Erzeugen des Stellsignals aus dem Eingangssignal einen Analog-zu-PWM-Wandler (9) aufweist, der aus dem Eingangssignal ein PWM-Signal - Puls-Weiten-Moduliertes Signal - erzeugt, wobei das PWM-Signal vorzugsweise eine feste Frequenz aufweist und wobei ein Spannungswert des Eingangssignals vorzugsweise in einem Aussteuergrad des PWM-Signals kodiert ist.

8. Motorsteuerung, insbesondere für einen Elektromotor, mit einer Eingangsstufe nach einem der Ansprüche 1 bis 7, wobei die Eingangsstufe (1) mit einem Steuereingang der Motorsteuerung (2) verbunden ist, wobei die Motorsteuerung (2) basierend auf einem über den Steuereingang empfangenen Stellsignal einen mit der Motorsteuerung (2) verbundenen Motor derart ansteuert, dass ein in dem Stellsignal kodierter Sollwert zumindest annährend eingehalten ist,
**dadurch gekennzeichnet, dass** die Motorsteuerung (2) Mittel zum Erkennen eines an dem Steuereingang anliegenden Kommunikationssignal aufweist und dass die Motorsteuerung (2) dazu ausgebildet ist, bei Erkennen eines Kommunikationssignals am Steuereingang in einen Konfigurationsmodus zu wechseln und das empfangene Kommunikationssignal zu verarbeiten.

9. Motorsteuerung nach Anspruch 8, **dadurch gekennzeichnet, dass** die Mittel zum Erkennen eines Kommunikationssignals zur Auswertung der Frequenz eines am dem Steuereingang anliegenden Signals ausgebildet sind, wobei bei Erkennen einer ersten Frequenz für ein Stellsignal und bei Erkennen einer zweiten Frequenz für ein Kommunikationssignal entschieden wird.

10. Motorsteuerung nach Anspruch 8 oder 9, **gekennzeichnet durch** einen Meldeausgang (14) zur Ausgabe von Statusinformationen, wobei die Motorsteuerung dazu ausgebildet ist, den Meldeausgang (14) in dem Konfigurationsmodus als Kommunikationsleitung zum Versenden von Antworten auf ein empfangenes Kommunikationssignal zu nutzen.

11. Motorsteuerung nach einem der Ansprüche 8 bis 10, **dadurch gekennzeichnet, dass** die Motorsteuerung (2) zum Erkennen eines Terminierungssignals in dem Kommunikationssignal ausgebildet ist, wobei die Motorsteuerung dazu ausgebildet ist, bei Erkennen eines Terminierungssignals den Konfigurationsmodus zu beenden.

12. Schnittstellenadapter zum Anschluss an eine Eingangsstufe nach einem der Ansprüche 1 bis 7, mit einer ersten Schnittstelle und einer zweiten Schnittstelle, wobei die erste Schnittstelle mit einem Endgerät, insbesondere einem Programmiergerät, verbindbar ist, wobei die zweite Schnittstelle mit der Eingangsstufe verbindbar ist und wobei der Schnittstelleadapter Daten, die über die erste Schnittstelle empfangen werden, auf ein Eingangssignal für die Eingangsstufe umsetzt und an die Eingangsstufe ausgibt.

## Claims

1. Input stage for a motor control, in particular a motor control for an electric motor, wherein the input stage (1) has an input (3) for inputting an input signal and an output (4) for connection to the motor control (2), wherein the input stage (1) is constructed to produce an actuation signal from an input signal between a first voltage (Uᵤₙₜₑₙ) and a second voltage (U_{oben}), wherein the second voltage (U_{oben}) is greater than the first voltage (Uᵤₙₜₑₙ), and to output the actuation signal as a desired value specification via the output to the motor control (2),
**characterised by** a first comparator (5) for comparing the input signal with a first threshold voltage (U_{S1}), wherein the first threshold voltage (U_{S1}) is greater than the second voltage (U_{oben}), and a data output unit (10), wherein the data output unit (10) based on at least a proportion of the input signal produces a communication signal, wherein the first comparator (5) when the first threshold voltage (U_{S1}) has been reached or exceeded outputs via the input signal an activation signal which activates an output of the communication signal by the data output unit (10) to the output (4),
wherein the data output unit (10) comprises a second switching device (8) and a second comparator (6) for comparing the input signal with a second threshold voltage (U_{S2}), wherein the second threshold voltage (U_{S2}) is greater than the first threshold voltage (U_{S1}), and wherein the second comparator (6), when the second threshold voltage (U_{S2}) has been reached or exceeded, outputs a switching signal to the second switching device (8).

2. Input stage according to claim 1, **characterised in that** the data output unit (10) produces the communication signal from the proportion of the input signal greater than or equal to the first threshold voltage (U_{S1}).

3. Input stage according to claim 1 or 2, **characterised in that**, in order to activate the output of the communication signal via the data output unit (10) to the output (4), a first switching device (7) is provided, wherein the first switching device (7) has two inputs, wherein one of the two inputs of the first switching device (7) is connected to the data output unit (10) and wherein at the second of the two inputs the actuation signal is at least temporarily present.

4. Input stage according to claim 3, **characterised in that** the first switching device (7) is configured in such a manner that, when the activation signal falls below a switching level, the actuation signal is present at an output of the first switching device (7), and **in that**, when the activation signal exceeds the switching level, the communication signal is present at the output of the first switching device (7).

5. Input stage according to any one of claims 1 to 4, **characterised in that** the second switching device (8) has two inputs, wherein at one of the two inputs a first logic signal is present and at the other of the two inputs a second logic signal is present, wherein the first logic signal and the second logic signal represent complementary logic values, wherein the first logic signal preferably has a high level and the second logic signal preferably has a low level.

6. Input stage according to any one of claims 1 to 5, **characterised in that** the second switching device (8) is constructed in such a manner that, when the switching signal falls below a switching level, the first logic signal is present at an output of the second switching device (8) and **in that**, when the switching signal exceeds the switching level, the second logic signal is present at the output of the second switching device (8).

7. Input stage according to any one of claims 1 to 6, **characterised in that** the input stage (1) in order to produce the actuation signal from the input signal has an analogue to PWM converter (9), which produces from the input signal a PWM signal (pulse width modulated signal), wherein the PWM signal preferably has a fixed frequency and wherein a voltage value of the input signal is preferably encoded in a phase control factor of the PWM signal.

8. Motor control, in particular for an electric motor, having an input stage according to any one of claims 1 to 7, wherein the input stage (1) is connected to a control input of the motor control (2), wherein the motor control (2), based on an actuation signal which is received via the control input, controls a motor which is connected to the motor control (2) in such a manner that a desired value which is encoded in the actuation signal is at least approximately complied with, **characterised in that** the motor control (2) has means for identifying a communication signal which is present at the control input and **in that** the motor control (2) is constructed, when a communication signal is identified at the control input, to change into a configuration mode and to process the received communication signal.

9. Motor control according to claim 8, **characterised in that** the means for identifying a communication signal are constructed for evaluating the frequency of a signal present at the control input, wherein, when a first frequency is identified, an actuation signal is decided upon and, when a second frequency is identified, a communication signal is decided upon.

10. Motor control according to claim 8 or 9, **characterised by** a notification output (14) for outputting status information, wherein the motor control is constructed to use the notification output (14) in the configuration mode as a communication line for sending responses to a received communication signal.

11. Motor control according to any one of claims 8 to 10, **characterised in that** the motor control (2) is constructed to identify a termination signal in the communication signal, wherein the motor control is constructed to end the configuration mode when a termination signal is identified.

12. Interface adapter for connection to an input stage according to any one of claims 1 to 7, having a first interface and a second interface, wherein the first interface can be connected to a terminal, in particular a programming device, wherein the second interface can be connected to the input stage and wherein the interface adapter converts data which are received via the first interface into an input signal for the input stage and outputs the input signal to the input stage.

## Revendications

1. Étage d'entrée pour une commande de moteur, plus particulièrement une commande de moteur pour un moteur électrique, l'étage d'entrée (1) comprenant une entrée (3) pour l'entrée d'un signal d'entrée et une sortie (4) pour la liaison avec la commande de moteur (2), l'étage d'entrée (1) étant conçue pour générer, à partir d'un signal d'entrée, en tre une première tension (Uᵤₙₜₑₙ) et une deuxième tension (U_{oben}), un signal de réglage, la deuxième tension (U_{oben}) étant supérieure à la première tension (Uᵤₙₜₑₙ) et le signal de réglage devant être envoyé en tant que valeur de consigne par l'intermédiaire de la sortie à la commande du moteur (2),
**caractérisé par** un premier comparateur (5) pour la comparaison du signal d'entrée avec une première tension seuil (U_{S1}), la première tension seuil (U_{S1}) étant supérieure à la deuxième tension (U_{oben}), et une unité d'envoi de données (10), l'unité d'envoi de données (10) générant, sur la base d'au moins une partie du signal d'entrée, un signal de communication, le premier comparateur (5) émettant, lorsque la première tension seuil (U_{S1}) est atteinte ou dépassée, par le signal d'entrée, un signal d'activation qui active un envoi du signal de communication par l'unité d'envoi de données (10) à la sortie (4),
l'unité d'envoi de données (10) comprenant un deuxième dispositif de commutation (8) et un deuxième comparateur (6) pour la comparaison du signal d'entrée avec une deuxième tension seuil (U_{S2}), la deuxième tension seuil (U_{S2}) étant supérieure à la première tension seuil (U_{S1}) et le deuxième comparateur (6) envoyant au deuxième dispositif de commutation (8) un signal de commutation lorsque la deuxième tension seuil (U_{S2}) est atteinte ou dépassée.

2. Étage d'entrée selon la revendication 1, **caractérisé en ce que** l'unité d'envoi de données (10) génère le signal de communication à partir de la partie du signal d'entrée supérieure ou égale à la première tension seuil (U_{S1}).

3. Étage d'entrée selon la revendication 1 ou 2, **caractérisé en ce que**, pour l'activation de l'envoi du signal de communication par l'unité d'envoi de données (10) à la sortie (4), un premier dispositif de commutation (7) est prévu, le premier dispositif de commutation (7) comprenant deux entrées, une des deux entrées du premier dispositif de commutation (7) étant reliée avec l'unité d'envoi de données (10) et, le signal de réglage étant appliqué au moins temporairement à au moins la deuxième des deux entrées.

4. Étage d'entrée selon la revendication 3, **caractérisé en ce que** le premier dispositif de commutation (7) est conçu de façon à ce que, lors du passage en dessous d'un niveau de commutation par le signal d'activation, le signal de réglage est appliqué à une sortie du premier dispositif de commutation (7) et **en ce que**, lors du dépassement du niveau de commutation par le signal d'activation, le signal de communication est appliqué à la sortie du premier dispositif de commutation (7).

5. Étage d'entrée selon l'une des revendications 1 à 4, **caractérisé en ce que** le deuxième dispositif de commutation (8) comprend deux entrées, un premier signal logique étant appliqué à une des deux entrées et un deuxième signal logique étant appliqué à l'autre des deux entrées, le premier signal logique et le deuxième signal logique représentant des valeurs logiques complémentaires, le premier signal logique présentant de préférence un niveau haut et le deuxième signal logique présentant de préférence un niveau bas.

6. Étage d'entrée selon l'une des revendications 1 à 5, **caractérisé en ce que** le deuxième dispositif de commutation (8) est conçu de façon à ce que, lors d'un passage en dessous d'un niveau de commutation par le signal de commutation, le premier signal logique est appliqué à une sortie du deuxième dispositif de commutation (8) et, lors du dépassement du niveau de commutation par le signal de commutation, le deuxième signal logique est appliquée à la sortie du deuxième dispositif de commutation (8).

7. Étage d'entrée selon l'une des revendications 1 à 6, **caractérisé en ce que** l'étage d'entrée (1) comprend, pour la génération du signal de réglage à partir du signal d'entrée, un convertisseur analogique-MLI (9) qui génère, à partir du signal d'entrée, un signal MLI, signal modulé par largeur d'impulsion, le signal MLI présentant de préférence une fréquence fixe et une valeur de tension du signal d'entrée étant codé de préférence dans un degré de commande du signal MLI.

8. Commande de moteur, plus particulièrement pour un moteur électrique, avec un étage d'entrée selon l'une des revendications 1 à 7, l'étage d'entrée (1) étant relié avec une entrée de commande de la commande de moteur (2), la commande de moteur (2) contrôlant, sur la base d'un signal de réglage reçu par l'intermédiaire de l'entrée de commande, un moteur relié avec la commande de moteur (2), de façon à ce qu'une valeur de consigne codée dans le signal de réglage soit respectée au moins approximativement,
**caractérisée en ce que** la commande de moteur (2) comprend des moyens pour la détection d'un signal de communication appliqué à l'entrée de commande et **en ce que** la commande de moteur (2) est conçue pour passer, lors de la détection d'un signal de communication au niveau de l'entrée de commande, dans un mode de configuration et pour traiter le signal de communication reçu.

9. Commande de moteur selon la revendication 8, **caractérisée en ce que** les moyens de détection d'un signal de communication sont conçus pour l'analyse de la fréquence d'un signal appliqué à l'entrée de commande, un signal de réglage étant décidé lors de la détection d'une première fréquence et un signal de communication étant décidé lors de la détection d'une deuxième fréquence.

10. Commande de moteur selon la revendication 8 ou 9, **caractérisée par** une sortie de signalisation (14) pour l'envoi d'informations d'état, la commande de moteur étant conçue pour utiliser la sortie de signalisation (14) dans le mode de configuration en tant que ligne de communication pour l'envoi de réponses à un signal de communication reçu.

11. Commande de moteur selon l'une des revendications 8 à 10, **caractérisée en ce que** la commande de moteur (2) est conçue pour la détection d'un signal de terminaison dans le signal de communication, la commande de moteur étant conçue pour terminer le mode de configuration lors de la détection d'un signal de terminaison.

12. Adaptateur d'interface pour le raccordement à un étage d'entrée selon l'une des revendications 1 à 7, avec une première interface et une deuxième interface, la première interface pouvant être reliée avec un terminal, plus particulièrement un appareil de programmation, la deuxième interface pouvant être reliée avec l'étage d'entrée et l'adaptateur d'interface convertissant les données reçues par l'intermédiaire de la première interface en un signal d'entrée pour l'étage d'entrée et les envoyant à l'étage d'entrée.
